# EUROPÄISCHE PATENTSCHRIFT

(11) **EP 2 027 623 B1**
(45) Veröffentlichungstag und Bekanntmachung des Hinweises auf die Patenterteilung: **20.08.2014**
(21) Anmeldenummer: 07725748.3
(22) Anmeldetag: 01.06.2007
(51) Int. Cl.: H01M 8/06, H01M 8/10, H01M 8/24, H01M 16/00

(54) **STROMVERSORGUNG MITTELS BRENNSTOFFZELLEN**
ELECTRICAL POWER SUPPLY BY MEANS OF FUEL CELLS
ALIMENTATION ÉLECTRIQUE PAR PILES À COMBUSTIBLE

(30) Priorität: 02.06.2006 DE 102006026257
(43) Veröffentlichungstag der Anmeldung: 25.02.2009
(73) Patentinhaber: Micronas GmbH, 79108 Freiburg (DE); Albert-Ludwigs-Universität Freiburg, 79104 Freiburg (DE)
(72) Erfinder: LEHMANN, Mirko, CH-9642 Ebnat-Kappel (CH); SIEBEN, Ulrich, D-79279 Vörstetten (DE); MÜLLER, Claas, 79104 Freiburg (DE); FRANK, Mirko, 79098 Freiburg (DE); ERDLER, Gilbert, 79100 Freiburg (DE)
(74) Vertreter: Koch Müller Patentanwaltsgesellschaft mbH
(86) Internationale Anmeldenummer: PCT/EP2007/004868
(87) Internationale Veröffentlichungsnummer: WO 2007/140936

(56) Entgegenhaltungen:
- EP-A- 1 521 327
- WO-A-2004/051775
- WO-A-2005/006478
- DE-A1-102004 055 276
- US-A1- 2003 170 520
- US-A1- 2005 060 876
- ERDLER ET AL: "Chip integrated fuel cell" SENSORS AND ACTUATORS A, ELSEVIER SEQUOIA S.A., LAUSANNE, CH, Bd. 132, Nr. 1, 30. Mai 2006 (2006-05-30), Seiten 331-336, XP005715285 ISSN: 0924-4247

## Beschreibung

Die Erfindung bezieht sich auf eine Stromversorgung gemäß den oberbegrifflichen Merkmalen des Patentanspruchs 1.

Die Bereitstellung einer elektrischen Stromversorgung erfolgt meistens mittels Verbindungen zu einem Stromnetz oder in elektrische Vorrichtungen eingesetzte Batterien und Akkumulatoren.

### Stand der Technik

Batterien und Akkumulatoren lassen sich auch durch Brennstoffzellenanordnungen ersetzen. Brennstoffzellen bestehen üblicherweise aus einer ersten und einer Elektrodenanordnung, von denen eine als Anode und die andere als Kathode dient. Zwischen den beiden Elektrodenanordnungen befindet sich eine Membran-Elektroden-Einheit (MEA) mit katalytischer Eigenschaft, welche als protonendurchlässige Membran mit katalytischer Beschichtung dient. Weiterhin müssen ein Brennstoff, typischerweise Wasserstoff, und ein Reaktant, der zur Stromerzeugung mit Protonen, die aus dem Brennstoff stammen und durch die Membran hindurchgetreten sind, reagiert, bereitgestellt und zugeführt werden. Durch serielle und parallele Verschaltung mehrerer Brennstoffzellen kann eine Stromversorgung mit den jeweils gewünschten Leistungsmerkmalen hergestellt werden. Eine für eine solche statische Verschaltung ausgelegte Anordnung von Brennstoffzellen wird beispielsweise in der DE 3907485 A1 offenbart.

Eine solche Anordnung weist jedoch Nachteile auf. So kann der Ausfall einer einzigen Brennstoffzelle das gesamte Aggregat unbrauchbar machen, weil z.B. bei einer Reihenschaltung nicht mehr die angestrebte Ausgangsspannung erreicht werden kann. Weiterhin ist der Innenwiderstand einer Brennstoffzelle und somit die bereitgestellte Zellspannung spürbar vom Stromfluss, und damit der angelegten Last abhängig. Dies kann einerseits das Ausgangsspannungsniveau der Stromversorgung beeinflussen und andererseits dazu führen, dass die einzelnen Zellen in einer festen Verschaltung nicht mehr im optimalen Arbeitsbereich betrieben werden können.

Lediglich im Hinblick auf den Betrieb bei niedrigen Lasten ist ein Lösungsansatz dazu aus der DE 10260013 A1 bekannt, bei dem im Niederlastbetrieb die Erzeugung elektrischer Energie mittels einer Brennstoffzelle komplett aufgehoben und durch eine Sekundärbatterie ersetzt wird.

Aus der WO 2004/051775 A ist eine Stromversorgung mit mehreren auf einem Chip integrierten Brennstoffzellen bekannt, welche wahlweise parallel oder in Reihe, einzeln oder gar nicht mittels einer CMOS-Schalteinrichtung an die Stromversorgung angeschlossen sind und die über eine Paladiumhydrid-Schicht zur Brennstoffspeicherung und eine Erfassungseinrichtung für den Ladezustand der Brennstoffzellen verfügen.

Aus der US 2005/060876 A1 ist eine Stromversorgung mit mehreren auf einem Chip integrierten Brennstoffzellen bekannt, welche wahlweise parallel, in Reihe, einzeln oder gar nicht mittels einer CMOS-Schalteinrichtung an die Stromversorgung angeschlossen sind. Des Weiteren sind Erfassungseinrichtungen für die an die Stromversorgung anliegende Last sowie die aktuelle Ausgangsspannung der Stromversorgung vorhanden. Eine zeitlich variable Wechselspannung ist ebenfalls offenbart.

Aus der US 2003/170520 A1 ist ebenfalls eine Stromversorgung mit mehreren auf einem Chip integrierten Brennstoffzellen bekannt, welche wahlweise parallel, in Reihe, einzeln oder gar nicht mittels einer Schalteinrichtung an die Stromversorgung angeschlossen sind. Des Weiteren wird eine DC-DC-Wandlerschaltung als nachgeschaltete integrierte Schaltung offenbart.

Die WO 2005/006478 A offenbart ebenfalls eine Stromversorgung mit mehreren Brennstoffzellen, welche wahlweise parallel, in Reihe, einzeln oder gar nicht mit einer Schalteinrichtung an die Stromversorgung angeschlossen sind. Darüber hinaus sind mehrere Anschlusskontakte zur Bereitstellung verschiedener Ausgangsspannung offenbart. Insbesondere sind Ausgänge für eine Gleichspannung von 3,3 Volt, 5 Volt sowie eine Wechselspannung von 120 bis 210 Volt vorhanden.

### Aufgabenstellung

Die Aufgabe der Erfindung besteht darin, die vorstehend genannten Nachteile zu beheben und eine verbesserte Stromversorgung mittels Brennstoffzellen bereitzustellen, die sich adaptiv der aktuellen Last anpassen und auf Lastwechsel reagieren kann.

Diese Aufgabe wird erfindungsgemäß durch eine Stromversorgung mittels Brennstoffzellen gemäss den Merkmalen des Patentanspruchs 1 gelöst.

Ausgegangen wird dabei von einer Anordnung von mehreren Brennstoffzellen oder fest verschalteten Gruppen von Brennstoffzellen, die durch eine Steuereinrichtung über verlustarme Schalter unterschiedlich verschaltet werden können.

In einer bevorzugten Ausführungsform werden diese Schalter als Halbleiterbauelemente, insbesondere in CMOS-Technologie gefertigt. Die Verwendung dieser erprobten Mikrostrukturtechnologie sorgt nicht nur für kurze Schaltzeiten bei geringer Leistungsaufnahme der Schalter, sondern ermöglicht auch eine kostengünstige Fertigung der Anordnung.

Zur Erzielung einer besonders kompakten Ausführungsform und zur vollen Ausnutzung des Potentials der Mikrostrukturtechnologie ist es von Vorteil, chipintegrierte Brennstoffzellen zu verwenden. Besonders geeignet sind dabei solche chipinterierten Brennstoffzellen, bei denen der Brennstoff (H2) und/ oder der Reaktant (02) in einer als Brennstoff-Bereitstellungseinrichtung ausgebildeten Elektrode und/oder einer dazu benachbarten Schicht integriert ist, da sich dann Zuführungen für diese Materialien aus externen Reservoiren erübrigen, was eine weitere Miniaturisierung und kompakte Bauweise ermöglicht. Dies ist gerade für mobile Anwendungen von hoher Bedeutung. Denkbar ist auch der Einsatz autarker Brennstoffzellen, wie sie in der EP1575116A1 offenbart sind.

Die Verwendung von Metallhydriden und insbesondere Palladiumhydrid für eine Elektrode, die als Brennstoff-Bereitstellungseinrichtung ausgelegt ist, hat sich dabei als besonders vorteilhaft erwiesen. Der spezifische Widerstand von mit Wasserstoff beladenem Palladium ist empfindlich von dem Beladungsgrad abhängig, so dass es durch eine einfache Widerstandsmessung möglich ist, den aktuellen Ladezustand einer gegebenen Brennstoffstelle mittels einer Erfassungseinheit auszulesen, wenn man einen integrierten Palladiumwasserstoffspeicher beispielsweise mit Goldleiterbahnen kontaktiert. Bei dieser bevorzugten Ausführungsform der Erfindung ist es möglich, eine Steuerelektronik vorzusehen, die den Ladezustand einer oder mehrerer gegebener Brennstoffzellen als Kriterium zur Auswahl der in eine gegebene Schaltkonfiguration einzubeziehende Brennstoffzelle verwendet.

Eine andere vorteilhafte Ausführungsform sieht vor, dass die an der Stromversorgung anliegende Last durch eine Erfassungseinheit gemessen wird und diese Information genutzt wird, um die Verschaltung der einzelnen Brennstoffzellen des Feldes zu optimieren.

Weiter besteht die Möglichkeit, die Ausgangsspannung der durch die Brennstoffzellen gebildeten Stromversorgung selbst mittels einer Erfassungseinheit zu überwachen und die Verschaltung beim Abweichen von einem Sollwert entsprechend anzupassen. Dies führt zu einer diskreten Änderung des Spannungswertes. Wird eine weitere Spannungsstabilisierung angestrebt, kann eine integrierte Schaltung zur Spannungsstabilisierung oder Spannungsregelung, insbesondere eine DC-DC Wandlerschaltung, der gesamten Brennstoffzellenanordnung oder auch einzelnen Bestandteilen dieser Anordnung bis hin zu einzelnen Brennstoffzellen nachgeschaltet werden. Insbesondere ist die Spannungsstabilisierung auf 3.3 bzw. 5 V von technologischem Interesse.

Die Ausgangsspannung, die durch die Steuereinrichtung -ggf. unter Einbeziehung einer oder mehrerer zusätzlicher DC-DC-Wandlerschaltungen- eingestellt wird, braucht dabei nicht zeitlich konstant zu sein. Die erfindungsgemässe variable Verschaltung erlaubt es vielmehr, zeitabhängige Ausgangsspannungsprofile bereitzustellen, bei denen die Zeitauflösung nur durch die Schaltzeiten der Schalter limitiert ist und der Betrag der maximalen Spannungsamplitude durch die konkret verwendete Brennstoffzellenanordnung vorgegeben ist.

Weiterhin erlaubt die erfindungsgemässe Verschaltung der Brennstoffzellen auch eine reversible Auftrennung des Systems in zwei Teilsysteme. Sieht man mehr als zwei Stromversorgungskontakte vor, ist denkbar, mittels der einen Brennstoffzellenanordnung simultan zwei sehr unterschiedliche Spannungssignale, z.B. eine auf 3.3 V stabilisierte Spannung und eine Wechselspannung mit einer Frequenz von 50 Hz und einer Amplitude von 1V bereitzustellen. Integriert man auf einem entsprechenden Chip noch einen Sensor/Aktuator einschliesslich Elektronik und Funkeinheit, so lassen sich Sensor und Elektronik und Funkeinheit mit unterschiedlichen Spannungen versorgen.

Besonders bevorzugt ist eine Ausführungsform des Systems, bei der sämtliche Bauelemente auf demselben Halbleiterkörper angeordnet sind.

### Ausführuncrsbeispiel

Ausführungsbeispiele werden nachstehend anhand der Zeichnungen näher erläutert. Es zeigen:
Fig 1: Prinzipskizze des Aufbaus einer einzelnen Brennstoffzelle in bevorzugter Ausführung.
Fig 2: Die Strom-Spannungskennlinie einer Brennstoffzelle
Fig 3: Prinzipskizze einer erfindungsgemässen Anordnung von zwei Brennstoffzellen.
Fig 4: Prinzipskizze zur Verdeutlichung einer erfindungsgemässen Anpassung der Verschaltung der Brennstoffzellen an den Ladungszustand der Zellen
Fig 5: Prinzipskizze zur Verdeutlichung einer erfindungsgemässen Anpassung der Verschaltung der Brennstoffzellen an einen erfolgten Lastwechsel.
Fig 6: Prinzipskizze zur Verdeutlichung einer erfindungsgemässen Anpassung der Verschaltung der Brennstoffzellen an einen Wechsel der Ausgangsspannung.
Fig 7: Prinzipskizze zur Verdeutlichung der erfindungsgemässen Spannungsstabilisierung mittels eines DC-DC Wandlers.

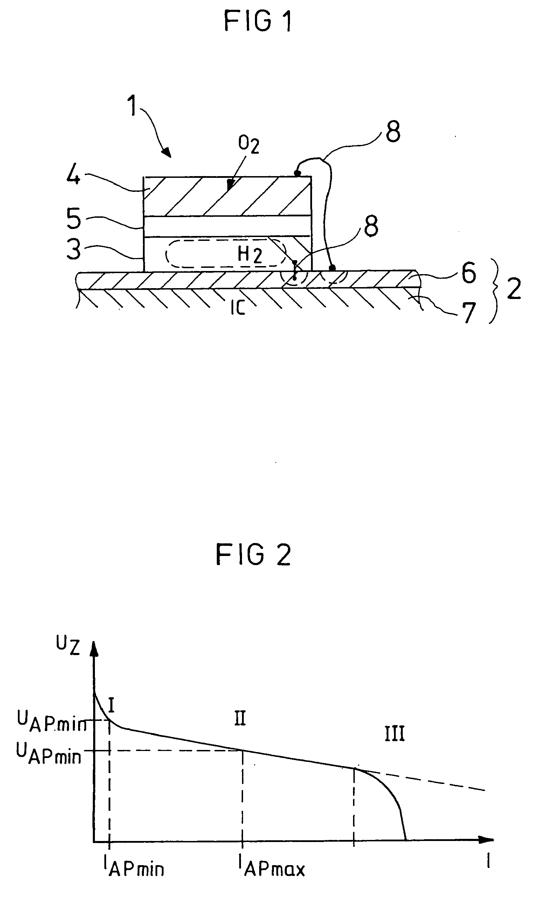

Wie aus Figur 1 hervorgeht, besteht eine Brennstoffzelle im wesentlichen aus einer ersten Elektrode 3 und einer zweiten Elektrode 4 bzw. entsprechenden Elektrodenanordnungen. Die beiden Elektroden (3,4) sind zumindest durch eine Protonen durchlassende Schicht 5 in Form vorzugsweise einer katalytischen Membran ausgebildet. Die Elektroden 3, 4 sind als Anode bzw. Kathode ausgebildet und weisen elektrische Anschlüsse 8 auf. Beim Ausführungsbeispiel ist die erste Elektrode 3 direkt auf einem Träger 2 angeordnet, so dass eine direkte Verbindung zu einem entsprechend leitfähigen Bereich des Trägers 2 erfolgen kann. Für den Anschluss der zweiten Elektrode 4 wird beispielsweise eine Kontaktierung 8 in From einer Leiterbahn ausgebildet, die von der zweiten Elektrode 4 aus zu der Oberfläche des Trägers 2 führt. Der Träger 2 besteht in besonders bevorzugter Ausführungsform aus einem Polysilizium 6 mit entsprechender Dotierung bzw. Ausbildung entsprechend dotierter Bereiche. Das Polysilizium 6 bildet eine Übergangsschicht zu einer darunter angeordneten integrierten Schaltung 7 (IC), die beispielsweise zur Verschaltung der Brennstoffzelle oder zur Spannungsstabilisierung dienen kann oder die Schaltung, die durch Brennstoffzellen mit Strom zu versorgen ist, ist.

Figur 2 zeigt die typische Strom-Spannungskennlinie einer Brennstoffzelle. Man erkennt sofort die Problematik, dass bei einem höheren Stromfluss, also höherer Last, die von der Brennstoffzelle bereitgestellte Ausgangsspannung absinkt.

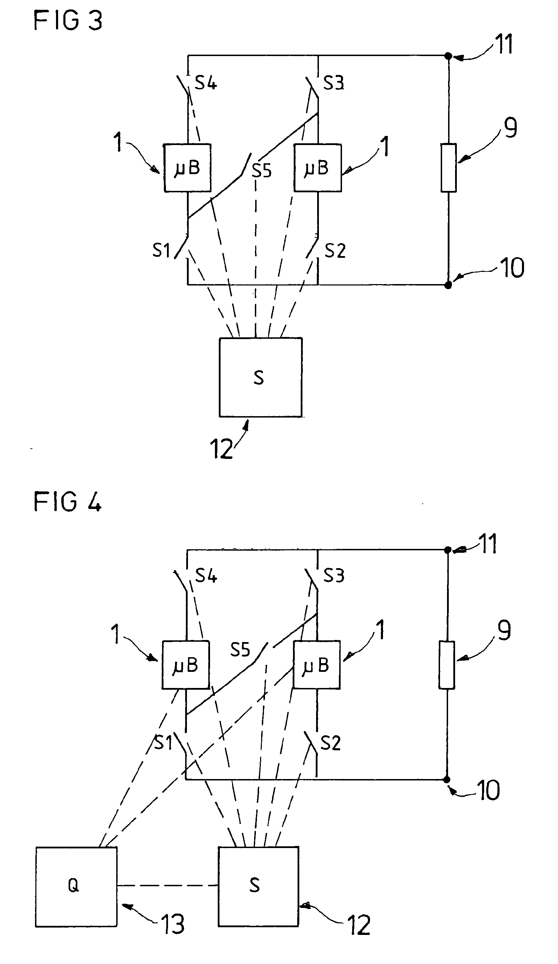

Anhand der Figur 3, in der wie in allen folgenden Figuren gestrichelte Linien eine Signalkommunikation andeuten, wird nun die erfindungsgemäße Anordnung schematisch unter Verwendung von Schaltsymbolen erklärt: Die Brennstoffzellen (1,1) sind miteinander durch Schalter (S1-S5) so verschaltbar, dass sie durch die Steuereinrichtung (12), welche die Schalterpositionen bestimmt, parallel, in Reihe, einzeln oder gar nicht zur Energieversorgung der an den Anschlusskontakten (10,11) angeschlossenen Last beitragen können. Konkret ergibt sich:
- eine Reihenschaltung der Brennstoffzellen, wenn nur die Schalter S2, S4 und S5 geschlossen sind
- eine Parallelschaltung der Brennstoffzellen, wenn nur die Schalter S1-S4 geschlossen sind
- Einzelbetrieb der linken Brennstoffzelle, wenn nur die Schalter S1 und S4 geschlossen sind
- Einzelbetrieb der rechten Brennstoffzelle, wenn nur die Schalter S2 und S3 geschlossen sind
- Abkopplung von der Last, wenn alle Schalter offen sind.

Die Figur 4 zeigt schematisch ein einfaches Beispiel für die Funktionsweise der Ladungsüberwachung. Angenommen wird wieder die einfache Anordnung von zwei Brennstoffzellen (1,1) und eine Last, für die die Versorgung durch eine Brennstoffzelle die optimale Betriebsbedingung darstellt. Diese Versorgung sei zunächst durch Schliessen der Schalter S1 und S4 durch die Steuereinrichtung (12), die mit den Schaltern (S1-S5) in Signalkommunikation steht und deren Schaltpositionen bestimmt, gewährleistet. Erfasst die Erfassungseinrichtung für den Ladezustand (13) der Zellen nun die Unterschreitung einer gegebenen Ladungsschwelle für die verwendete Brennstoffzelle, wird diese Information an die Steuereinrichtung (12) weitergegeben, die daraufhin durch Schliessen der Schalter S2 und S3 und gleichzeitiges Öffnen der Schalter S1 und S4 die Brennstoffzelle, durch die die elektrische Energie bereitgestellt wird, austauscht. Ebenso ist denkbar, dass bei Verfügbarkeit von mehreren unbelasteten Brennstoffzellen diejenige verwendet wird, deren Ladezustand noch am höchsten ist.

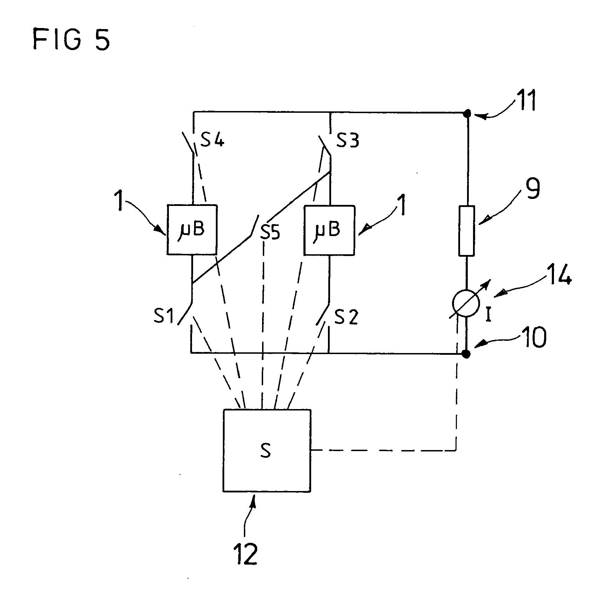

Die Figur 5 zeigt schematisch ein einfaches Beispiel für die Funktionsweise der Lastüberwachung. Angenommen wird wieder die einfache Anordnung von zwei Brennstoffzellen (1,1) und zunächst eine Last, für die die Versorgung durch eine Brennstoffzelle die optimale Betriebsbedingung darstellt. Diese Versorgung sei zunächst durch Schliessen der Schalter S1 und S4 durch die Steuereinrichtung (12), die mit den Schaltern (S1-S5) in Signalkommunikation steht und deren Schaltpositionen bestimmt, gewährleistet. Erfasst die Erfassungseinrichtung für die aktuelle Last (14) nun beispielsweise einen Anstieg der Last, so dass die Betriebsbedingungen der belasteten Brennstoffzellen den optimalen Bereich verlassen, wird diese Information an die Steuereinrichtung (12) weitergegeben, die daraufhin durch Schliessen der Schalter S2 und S3 die Last auf mehr Brennstoffzellen verteilt.

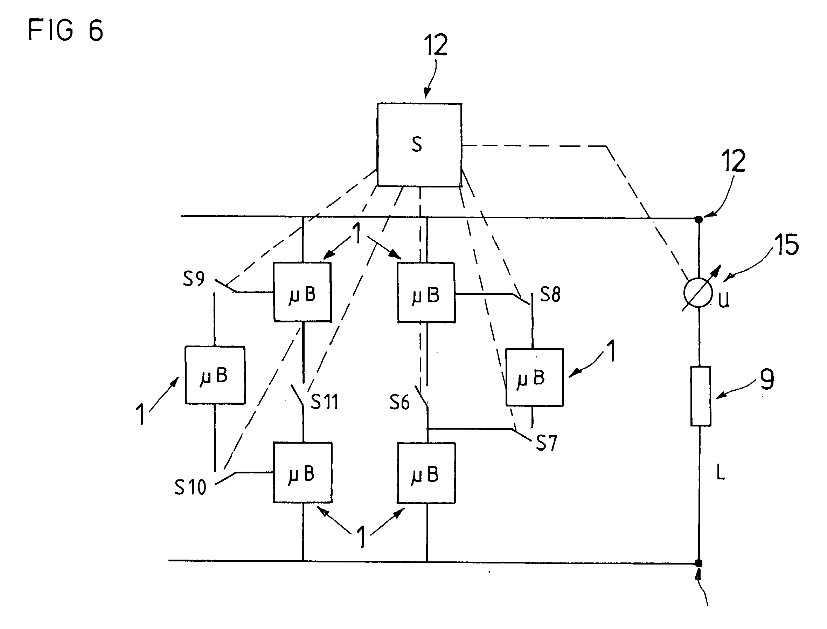

Die Figur 6 zeigt schematisch ein einfaches Beispiel für die Funktionsweise der Ausgangsspannungsüberwachung. Dabei sind nur die Schalter S6-S11 eingezeichnet, die in diesem Beispiel betätigt werden. Angenommen wird hier eine Anordnung von sechs Brennstoffzellen (1) und zunächst eine Last, für die die Versorgung durch zwei aus jeweils zwei in Reihe geschalteten Brennstoffzellen gebildete Kaskaden zu optimalen Betriebsbedingung der Brennstoffzellen führt. Dazu sind nur die Schalter S11 und S6 geschlossen. Erfasst die Erfassungseinrichtung für die aktuelle Ausgangsspannung (15) nun einen starken Abfall der Spannung, so wird diese Information an die Steuereinrichtung (12) weitergegeben, die daraufhin durch Schliessen der Schalter S7-S10 und Öffnen der Schalter S11 und S6 die Ausgangsspannung wieder erhöht.

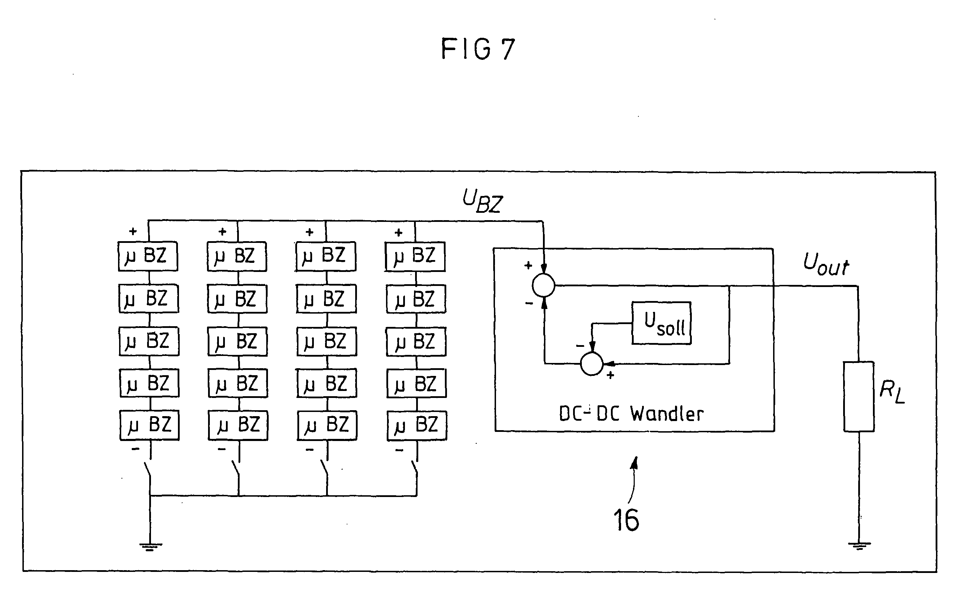

Die Figur 7 zeigt das Prinzip einer nachgeschalteten Spannungsstabilisierung mittels eines DC-DC-Wandlers(16). Ausgegangen wird hier von mehreren Kaskaden von Brennstoffzellen, die als Funktion der Last zu- bzw. abgeschaltet werden, wie vorstehend anhand des in der Figur 4 dargestellten einfachen Beispiel verdeutlicht wurde. Kommt es nun zu einem Lastwechsel und wird eine der Kaskaden zugeschaltet, wird der Strom durch jede einzelne der Kaskaden reduziert, so dass man an einem anderen Punkt der Strom-Spannungskennlinie arbeitet. Als Konsequenz würde ein solches Zu- bzw. Abschalten zu einer spürbaren Änderung der Ausgangsspannung führen. Prinzipiell lässt sich dieser Effekt durch die Änderung der Zahl von Brennstoffzellen, die in den einzelnen Kaskaden in Reihe geschaltet sind, kompensieren, wie es vorstehend anhand der Figur 5 geschildert wurde, allerdings nur in diskreten Schritten. Für eine verbesserte Stabilisierung ist es deshalb zweckmäßig, eine DC-DC-Wandlerschaltung (16) der Brennstoffzellenanordnung nachgeordnet einzuseten.

Bei den dargestellten Ausführungsbeispielen sind lediglich die prinzipiellen Funktionsweisen der jeweiligen Bauelemente skizziert. Weitere für die Funktion erforderliche Bauelemente sind gemäß dem Wissen des Fachmanns einzusetzen.

### Bezugszeichenliste

- 1: Brennstoffzelle
- 2: Träger
- 3: erste Elektrode
- 4: zweite Elektrode
- 5: protonendurchlässige Schicht
- 6: Polysilizium
- 7: integrierte Schaltung
- 8: elektrischer Leiter
- 9: Last
- 10: Anschlusskontakt
- 11: Anschlusskontakt
- 12: Steuereinrichtung
- 13: Erfassungseinrichtung für den Ladezustand
- 14: Erfassungseinrichtung für die aktuelle Last
- 15: Erfassungseinrichtung für die aktuelle Ausgangsspannung
- 16: DC-DC-Wandler

## Patentansprüche

1. Stromversorgung mit mindestens zwei Brennstoffzellen (1,1) oder fest miteinander verschalteten Gruppen von Brennstoffzellen und mindestens zwei Stromversorgungskontakten (10,11), wobei jede Brennstoffzelle aufweist:
- eine erste Elektrode (3) und eine zweite Elektrode (4), von denen eine als Kathode und eine als Anode ausgebildet ist,
- eine zumindest Protonen durchlassenden Schicht (5) mit katalytischer Wirkung oder zusätzlich einem katalytischen Material im Bereich zwischen der ersten Elektrode (3) und der zweiten Elektrode (4)
- eine Brennstoff-Bereitstellungseinrichtung zum Zuführen eines Brennstoffs (H2),
- eine Reaktant-Bereitstellungseinrichtung zum Zuführen eines Reaktands (02), welcher zur Stromerzeugung mit Protonen aus dem Brennstoff (H2) reagiert, und die Brennstoff-Bereitstellungseinrichtung sowie Reaktant-Bereitstellungseinrichtung auf der Seite der ersten Elektrode (3) oder der Seite der zweiten Elektrode (4) angeordnet sind,
wobei mindestens zwei der Brennstoffzellen (1) oder fest miteinander verschalteten Gruppen von Brennstoffzellen derart mit einer Schalteinrichtung miteinander gekoppelt sind, dass diese Brennstoffzellen (1) oder fest miteinander verschalteten Gruppen von Brennstoffzellen wahlweise in Parallelschaltung, in Reihenschaltung, einzeln oder gar nicht an die Stromversorgungskontakte angeschlossen sind,
**dadurch gekennzeichnet, dass** eine Erfassungseinrichtung für den Ladezustand der einzelnen Brennstoffzellen (13) vorgesehen ist, die in Signalkommunikation mit der Schalteinrichtung steht und dass die Schalteinrichtung zur automatischen Anpassung der Verschaltung der Brennstoffzellen (1) an ihren Ladezustand ausgebildet ist.

2. Stromversorgung gemäss Anspruch 1,
**dadurch gekennzeichnet, dass** die Schalteinrichtung Halbleiterschalter umfasst.

3. Stromversorgung gemäss Anspruch 2,
**dadurch gekennzeichnet, dass** die Halbleiterschalter CMOS-Transistoren sind.

4. Stromversorgung gemäss einem der Ansprüche 1 bis 3,
**dadurch gekennzeichnet, dass** die Brennstoffzellen (1) auf einem Chip integriert sind.

5. Stromversorgung gemäss Anspruch 4,
**dadurch gekennzeichnet, dass** der Brennstoff (H2) und/oder das Reaktant (02) in dem Material einer der als Brennstoffbereitstellungseinrichtung ausgebildeten Elektroden integriert ist und die Brennstoffzelle keine Zuführungen für Brennstoff und/oder Reaktant aus einem externen Vorrat aufweist.

6. Stromversorgung gemäss Anspruch 5,
**dadurch gekennzeichnet, dass** Mittel zur Regeneration des Brennstoffs vorgesehen sind.

7. Stromversorgung gemäss Anspruch 5 oder 6,
**dadurch gekennzeichnet, dass** das Material einer der Elektroden ein Metallhydrid ist.

8. Stromversorgung gemäss Anspruch 7,
**dadurch gekennzeichnet, dass** das Metallhydrid Palladiumhydrid ist.

9. Stromversorgung gemäss einem der vorstehenden Ansprüche,
**dadurch gekennzeichnet, dass** eine Erfassungseinrichtung (14) für die an der Stromversorgung anliegende Last (9) vorgesehen ist, die in Signalkommunikation mit der Schalteinrichtung steht und dass die Steuereinrichtung (12) zur automatischen Anpassung der Verschaltung der Brennstoffzellen (1) an die anliegende Last ausgebildet ist.

10. Stromversorgung gemäss einem der vorstehenden Ansprüche,
**dadurch gekennzeichnet, dass** eine Erfassungseinrichtung (15) für die aktuelle Ausgangsspannung der Stromversorgung vorgesehen ist, die in Signalkommunikation mit der Schalteinrichtung steht und dass die Schalteinrichtung zur automatischen Anpassung der Verschaltung der Brennstoffzellen (1) auf eine vorgegebene Ausgangsspannung ausgebildet ist.

11. Stromversorgung gemäss Anspruch 10,
**dadurch gekennzeichnet, dass** die vorgegebene Ausgangsspannung zeitlich variabel ist.

12. Stromversorgung gemäss Anspruch 11,
**dadurch gekennzeichnet, dass** mindestens zwei Paare von Anschlusskontakten (10,11) zur gleichzeitigen Bereitstellung von mindestens zwei Spannungen vorgesehen sind.

13. Stromversorgung gemäss Anspruch 12,
**dadurch gekennzeichnet, dass** mindestens eine der Spannungen eine Wechselspannung und mindestens eine der Spannungen eine konstante Spannung ist.

14. Stromversorgung gemäss einem der Ansprüche 1 bis 10,
**dadurch gekennzeichnet, dass** eine einzelnen Brennstoffzellen oder Gruppen von Brennstoffzellen nachgeschaltete integrierte Schaltung zur Aufrechterhaltung einer konstanten Ausgangsspannung vorgesehen ist.

15. Stromversorgung gemäss Anspruch 10,
**dadurch gekennzeichnet, dass** die nachgeschaltete integrierte Schaltung eine DC-DC-Wandlerschaltung (16) ist.

16. Stromversorgung gemäss Anspruch 10, 12 oder 15,
**dadurch gekennzeichnet, dass** die vorgegebene Ausgangsspannung konstant 5 V oder 3.3 V beträgt.

17. Stromversorgung gemäss einem der vorstehenden Ansprüche,
**dadurch gekennzeichnet, dass** sich alle Bauteile auf demselben Halbleiterkörper befinden.

18. Stromversorgung gemäss Anspruch 17,
**dadurch gekennzeichnet, dass** sich auf dem Halbleiterkörper zusätzlich ein Sensor oder Aktuator einschließlich Elektronik und Funkeinheit befindet.

## Claims

1. Power supply with at least two fuel cells (1, 1) or groups of fuel cells fixedly connected together and at least two power supply contacts (10, 11), wherein each fuel cell comprises:
- a first electrode (3) and a second electrode (4), of which one is constructed as a cathode and one as an anode,
- a layer (5), which allows passage of at least protons, with catalytic action or additionally a catalytic material in the region between the first electrode (3) and the second electrode (4),
- a fuel preparation device for feeding a fuel (H2),
- a reactant preparation device for feeding a reactant (02), which for power generation reacts with protons from the fuel (H2), and the fuel preparation device as well as reactant preparation device are arranged on the side of the first electrode (3) or the side of the second electrode (4),
wherein at least two of the fuel cells (1) or groups of fuel cells fixedly connected together are so coupled together with a switching device that these fuel cells (1) or groups of fuel cells fixedly connected together are selectably connected in parallel, in series, individually or not at all with the power supply contacts,
**characterised in that** a detecting device for the charge stage of the individual fuel cells (13) is provided, which is in signal communication with the switching device, and that the switching device is constructed for automatic adaptation of the connection of the fuel cells (1) to the charge state thereof.

2. Power supply according to claim 1, **characterised in that** the switching device comprises semiconductor switches.

3. Power supply according to claim 2, **characterised in that** the semiconductor switches are CMOS transistors.

4. Power supply according to any one of claims 1 to 3, **characterised in that** the fuel cells (1) are integrated on a chip.

5. Power supply according to claim 4, **characterised in that** the fuel (H2) and/or the reactant (02) are integrated in the material of one of the electrodes constructed as fuel preparation device and the fuel cell has no feeds for fuel and/or reactant from an external store.

6. Fuel supply according to claim 5, **characterised in that** means for regeneration of the fuel are provided.

7. Power supply according to claim 5 or 6, **characterised in that** the material of one of the electrodes is a metal hydride.

8. Power supply according to claim 7, **characterised in that** the metal hydride is palladium hydride.

9. Power supply according to any one of the preceding claims, **characterised in that** a detecting device (14) for the load (9) present at the power supply is provided, which detecting device is in signal communication with the switching device, and that the control device (12) is constructed for automatic adaptation of the connection of the fuel cells (1) with the load present.

10. Power supply according to any one of the preceding claims, **characterised in that** a detecting device (15) for the instantaneous output voltage of the power supply is provided, which detecting device is in signal communication with the switching device, and that the switching device is constructed for automatic adaptation of the connection of the fuel cells (1) to a predetermined output voltage.

11. Power supply according to claim 10, **characterised in that** the predetermined output voltage is variable in time.

12. Power supply according to claim 11, **characterised in that** at least two pairs of connecting contacts (10, 11) for simultaneous preparation of at least two voltages are provided.

13. Power supply according to claim 12, **characterised in that** at least one of the voltages is an alternating voltage and at least one of the voltages is a constant voltage.

14. Power supply according to any one of claims 1 to 10, **characterised in that** an integrated circuit, which is connected downstream of individual fuel cells or groups of fuel cells, for maintenance of a constant output voltage is provided.

15. Power supply according to claim 10, **characterised in that** the downstream integrated circuit is a DC-DC converter circuit (16).

16. Power supply according to claim 10, 12 and 15, **characterised in that** the predetermined output voltage is a constant 5 volts or 3.3 volts.

17. Power supply according to any one of the preceding claims, **characterised in that** all components are disposed on the same semiconductor body.

18. Power supply according to claim 17, **characterised in that** in addition a sensor or an actuator inclusive of electronic system and radio unit is disposed on the semiconductor body.

## Revendications

1. Alimentation électrique avec au moins deux piles à combustible (1, 1) ou des groupes de piles à combustible fixement connectés les uns aux autres et au moins deux contacts d'alimentation électrique (10, 11), dans laquelle chaque pile à combustible présente :
- ne première électrode (3) et une deuxième électrode (4), dont l'une forme une cathode et une autre forme une anode,
- une couche (5) laissant passer au moins les protons avec un effet catalytique ou en plus un matériau catalytique dans la région située entre la première électrode (3) et la deuxième électrode (4),
- un dispositif de préparation de combustible pour fournir un combustible (H2),
- un dispositif de préparation de réactif pour fournir un réactif (02), qui réagit avec des protons du combustible (H2) pour produire du courant, et le dispositif de préparation de combustible ainsi que le dispositif de préparation de réactif sont disposés sur le côté de la première électrode (3) ou sur le côté de la deuxième électrode (4),
dans laquelle au moins deux des piles à combustible (1) ou des groupes de piles à combustible fixement connectés les uns avec les autres sont couplés les uns aux autres avec un dispositif de commutation, de telle manière que des piles à combustible (1) ou des groupes de piles à combustible fixement connectés les uns aux autres soient raccordées/raccordés aux contacts d'alimentation électrique au choix en montage parallèle, en montage série, individuellement ou même pas du tout, **caractérisée en ce qu'**il est prévu un dispositif de détection pour l'état de charge des piles à combustible individuelles (13), qui se trouve en communication de signaux avec le dispositif de commutation et **en ce que** le dispositif de commutation est conçu en vue de l'adaptation automatique de la connexion des piles à combustible (1) à leur état de charge.

2. Alimentation électrique selon la revendication 1, **caractérisée en ce que** le dispositif de commutation comprend des commutateurs semi-conducteurs.

3. Alimentation électrique selon la revendication 2, **caractérisée en ce que** les commutateurs statiques sont des transistors CMOS.

4. Alimentation électrique selon l'une quelconque des revendications 1 à 3, **caractérisée en ce que** les piles à combustible (1) sont intégrées sur une puce.

5. Alimentation électrique selon la revendication 4, **caractérisée en ce que** le combustible (H2) et/ou le réactif (02) est intégré dans le matériau d'une des électrodes conçue comme dispositif de préparation de combustible et la pile à combustible ne présente aucun apport de combustible et/ou de réactif à partir d'une source extérieure.

6. Alimentation électrique selon la revendication 5, **caractérisée en ce qu'**il est prévu des moyens pour la régénération du combustible.

7. Alimentation électrique selon la revendication 5 ou 6, **caractérisée en ce que** le matériau d'une des électrodes est un hydrure métallique.

8. Alimentation électrique selon la revendication 7, **caractérisée en ce que** l'hydrure métallique est l'hydrure de palladium.

9. Alimentation électrique selon l'une quelconque des revendications précédentes, **caractérisée en ce qu'**il est prévu un dispositif de détection (14) pour la charge (9) appliquée à l'alimentation électrique, qui est en communication de signaux avec le dispositif de commutation et **en ce que** le dispositif de commande (12) est conçu en vue de l'adaptation automatique de la connexion des piles à combustible (1) à la charge appliquée.

10. Alimentation électrique selon l'une quelconque des revendications précédentes, **caractérisée en ce qu'**il est prévu un dispositif de détection (15) pour la tension de sortie actuelle de l'alimentation électrique, qui est en communication de signaux avec le dispositif de commutation et **en ce que** le dispositif de commutation est conçu en vue de l'adaptation automatique de la connexion des piles à combustible (1) à une tension de sortie prédéterminée.

11. Alimentation électrique selon la revendication 10, **caractérisée en ce que** la tension de sortie prédéterminée est variable dans le temps.

12. Alimentation électrique selon la revendication 11, **caractérisée en ce qu'**il est prévu au moins deux paires de contacts de raccordement (10, 11) pour la fourniture simultanée d'au moins deux tensions.

13. Alimentation électrique selon la revendication 12, **caractérisée en ce qu'**au moins une des tensions est une tension alternative et au moins une des tensions est une tension constante.

14. Alimentation électrique selon l'une quelconque des revendications 1 à 10, **caractérisée en ce qu'**il est prévu un circuit intégré connecté en aval des piles à combustible individuelles ou des groupes de piles à combustible pour maintenir une tension de sortie constante.

15. Alimentation électrique selon la revendication 10, **caractérisée en ce que** le circuit intégré connecté en aval est un circuit convertisseur CC-CC (16).

16. Alimentation électrique selon la revendication 10, 12 ou 15, **caractérisée en ce que** la tension de sortie prédéterminée est constante et vaut 5 V ou 3,3 V.

17. Alimentation électrique selon l'une quelconque des revendications précédentes, **caractérisée en ce que** tous les composants se trouvent sur le même corps semi-conducteur.

18. Alimentation électrique selon la revendication 17, **caractérisée en ce qu'**un capteur ou un actionneur, y compris une électronique et une unité radio, se trouve en plus sur le corps semi-conducteur.
